# EUROPÄISCHE PATENTSCHRIFT

(11) **EP 3 765 927 B1**
(45) Veröffentlichungstag und Bekanntmachung des Hinweises auf die Patenterteilung: **04.01.2023**
(21) Anmeldenummer: 19711517.3
(22) Anmeldetag: 07.03.2019
(51) Int. Cl.: G05B 17/02, B25J 9/16, G06T 17/00, G05D 1/02, G06V 10/776, G06V 20/56

(54) **VERFAHREN ZUM ERZEUGEN EINES TRAININGSDATENSATZES ZUM TRAINIEREN EINES KÜNSTLICHEN-INTELLIGENZ-MODULS FÜR EINE STEUERVORRICHTUNG EINES FAHRZEUGS**
METHOD FOR GENERATING A TRAINING DATA RECORD FOR TRAINING AN ARTIFICIAL INTELLIGENCE MODULE FOR A CONTROL DEVICE OF A VEHICLE
PROCÉDÉ SERVANT À GÉNÉRER UN JEU DE DONNÉES D'ENTRAÎNEMENT SERVANT À ENTRAÎNER UN MODULE À INTELLIGENCE ARTIFICIELLE POUR UN DISPOSITIF DE COMMANDE D'UN VÉHICULE

(30) Priorität: 14.03.2018 DE 102018203834; 15.02.2019 DE 102019202090
(43) Veröffentlichungstag der Anmeldung: 20.01.2021
(73) Patentinhaber: Robert Bosch GmbH, 70442 Stuttgart (DE)
(72) Erfinder: MEHNERT, Jens Eric Markus, 71272 Malmsheim (DE)
(86) Internationale Anmeldenummer: PCT/EP2019/055688
(87) Internationale Veröffentlichungsnummer: WO 2019/175012

(56) Entgegenhaltungen:
- WO-A1-2018/002910
- DE-A1-102017 105 628

## Beschreibung

### Gebiet der Erfindung

Die vorliegende Erfindung betrifft das Gebiet der Künstlichen Intelligenz, insbesondere ein Verfahren zum Erzeugen eines Trainingsdatensatzes zum Trainieren eines Künstlichen-Intelligenz-Moduls, KI-Modul. Das KI-Modul kann beispielsweise in einer Steuervorrichtung für eine sich zumindest teilweise automatisiert bewegende Vorrichtung, wie etwa einem zumindest teilweise autonomen Roboter oder einem zumindest teilweise automatisiert fahrenden Fahrzeug, implementiert sein.

### Stand der Technik

Beispielsweise in der Automatisierungstechnik, Robotik, im autonomen Fahren usw. werden zum automatisierten Steuern von z.B. zumindest teilautonomen Robotern häufig Künstliche-Intelligenz-Module, im Folgenden auch als KI-Module bezeichnet, eingesetzt. Diese basieren auf trainierten Daten und sollen z.B. im wenigstens teilautonomen Real-Betrieb des Roboters eine insbesondere ein Umfeld des Roboters berücksichtigende Steuerung, z.B. bei einem zumindest teilweise automatisiert fahrenden Kraftfahrzeugs eine verkehrssichere Steuerung, desselben gewährleisten, indem sie für auftretende Fahrereignisse geeignete Reaktionen einleiten. Bezogen auf die Fahrzeugtechnik, sollte z.B. das Fahrzeug so gesteuert werden, dass Kollisionen mit Hindernissen und/oder anderen Verkehrsteilnehmern verhindert werden oder das Kraftfahrzeug spurtreu dem sich laufend ändernden Fahrbahnverlauf folgt.

Hierfür kann ein solches KI-Modul beispielsweise wenigstens ein künstliches neuronales Netz umfassen, das im Folgenden auch als KNN bezeichnet wird. Dieses KNN wird mit Trainingsdatensätzen trainiert, um dem KI-Modul nach und nach das verkehrssichere autonome Bewegen, z.B. Fahren, beizubringen. Allerdings ist bisher kein Simulator bekannt, der die Umwelt und insbesondere eine mögliche Roboterumgebung, z.B. Fahrzeugumgebung, ausreichend realistisch abbilden kann, um einem insbesondere simulierten Roboter das sichere Bewegen, z.B. einem Kraftfahrzeug das verkehrssichere Fahren, beizubringen. So wäre der Rechenaufwand für einen solchen realistischen Simulator vergleichsweise hoch, da, bezogen auf die Fahrzeugtechnik, zumindest Straßen, statische und dynamische Objekte und auch das Bewegungsverhalten der dynamischen Objekte simuliert werden müssten. In der Praxis wird die Umwelt daher auf ein Modell reduziert bzw. vereinfacht, auf dessen Basis eine Simulation zum Trainieren des KI-Moduls erstellt wird. Hierzu kann beispielsweise ein KNN trainiert werden, dass die Umwelt auf ein solch vereinfachtes Modell reduziert. Es hat sich gezeigt, dass der Trainingserfolg für das mit dieser reduzierten Simulation zu trainierende KI-Modul verbesserungswürdig ist.

Aus der WO 2018/002910 A ist darüber hinaus eine computerimplementierte Methode zur Erstellung von realistischen, virtuellen Modellen eines geographischen Gebietes bekannt.

Die DE 10 2017 105628 A1 beschreibt zudem ein Verfahren und Systeme zum Erzeugen virtueller Sensordaten für die Entwicklung oder das Testen von Computerseherkennungsalgorithmen.

### Offenbarung der Erfindung

Die Erfindung ist in den unabhängigen Ansprüchen definiert.

Ausführungsformen der Erfindung stellen eine Möglichkeit für ein verbessertes Training eines KI-Moduls sowie eine darauf basierende Verwendung des KI-Moduls zur Verfügung. Vorteilhafte Weiterbildungen der Erfindung ergeben sich aus den abhängigen Ansprüchen, der Beschreibung sowie den begleitenden Figuren.

Das vorgeschlagene Verfahren eignet sich zum Erzeugen eines Trainingsdatensatzes zum Trainieren eines Künstlichen-Intelligenz-Moduls, KI-Moduls. Alternativ oder zusätzlich dazu, kann sich das vorgeschlagene Verfahren auch zum Trainieren eines KI-Moduls eignen. Bei dem KI-Modul kann es sich beispielsweise um ein Software-Programm für eine computergestützte Steuervorrichtung eines Roboters, z.B. eines zumindest teilweise automatisiert fahrenden Kraftfahrzeugs, handeln kann. Dabei kann das KI-Modul dazu eingerichtet sein, eine Ausgabe zum elektronischen Ansteuern des Roboters durch eine Steuervorrichtung, durch z.B. ein Steuergerät des zumindest teilweise automatisiert fahrenden Kraftfahrzeugs, zu erzeugen und diesem zuzuführen, welches basierend auf der Ausgabe beispielsweise ein Ausweichmanöver und/oder ein Bremsmanöver ermitteln kann. Die Steuervorrichtung kann ferner den Roboter, z.B. das Kraftfahrzeug, zur Durchführung dieses Ausweichmanövers und/oder Bremsmanövers durch das Ansteuern von Aktoren oder ähnlichem veranlassen. Das KI-Modul kann hierfür Programmcode und auch insbesondere mehrschichtige und/oder faltende künstliche neuronale Netze (KNN) umfassen.

Das erfindungsgemäße Verfahren lässt sich computergestützt in einer Datenverarbeitungseinrichtung, die wenigstens eine Speichereinheit und eine Recheneinheit aufweist, umsetzen und umfasst die folgenden Schritte:
- Zunächst wird eine Bildsequenz bereitgestellt, in der allgemein eine Umwelt, insbesondere eine Roboterumgebung, in Bildern erfasst ist. In anderen Worten umfasst die Bildsequenz Bilder einer Umgebung bzw. Umwelt, in der sich der Roboter aufhalten, bewegen usw. kann. Die Bildsequenz kann vorab mit z.B. einem Fahrzeug erfasst werden, das über eine Bilderfassungseinrichtung verfügt, wie etwa eine Kamera, LIDAR-Sensoren usw. Diese kann im Real-Fahrbetrieb durch unterschiedliche Umgebungen gefahren werden und eine oder mehrere Bildsequenzen erstellen, die hier als Bildsequenz für das beschriebene Verfahren bereitgestellt werden können.
- Dann wird wenigstens eine Trajektorie bestimmt, die in der Roboterumgebung anordbar ist. Unter einer Trajektorie kann in diesem Zusammenhang eine Art Raumkurve verstanden werden, d.h. ein möglicher Weg oder Pfad des Roboters oder eines anderen, insbesondere dynamischen, Objekts in oder durch die in der Bildsequenz enthaltenen Umwelt bzw. Fahrzeugumgebung. Die Trajektorie kann als anordbar angesehen werden, wenn sie von einem zugeordneten Objekt, das heißt einem Objekt, das der Trajektorie folgen soll, als realisierbar, z.B. in Hinblick auf physikalische Grenzen, angesehen werden kann. In anderen Worten, wird mindestens eine beliebige Trajektorie für alle beliebigen dynamischen Objekte, die sich aus der bereitgestellten Bildsequenz für die darin erfasste Roboterumgebung ergeben, erzeugt wird. So können zum einen alle möglichen (bis auf Einschränkung der Genauigkeit endlich viele Trajektorien, also unterschiedliche Trajektorien-Konfigurationen) Bewegungen dynamischer Objekte berücksichtigt werden, aber auch die Bewegung des Roboters selbst relativ zu seiner Umgebung.
- Es wird wenigstens eine zukünftige, insbesondere künstliche, Bildfolge generiert, die sich auf einen in Bezug auf einen Sequenzendzeitpunkt in der Zukunft liegenden Zeitabschnitt erstreckt und basierend auf der wenigstens einen bestimmten Trajektorie eine Prädiktion von Bildern für den Fall umfasst, dass der bestimmten Trajektorie während des in der Zukunft liegenden Zeitabschnitts gefolgt würde. In anderen Worten, werden eine oder mehrere zukünftige Bildfolgen basierend auf ausgewählten möglichen Trajektorien künstlich erzeugt. Die Bildfolge kann auch als Simulation, insbesondere Kurzzeit-Simulation, angesehen werden, in der die gesamte Szene, die sich auf Basis der Bildsequenz und/oder der Prädiktion ergibt, simuliert wird. Diese Simulation kann alle dynamischen und nicht dynamischen Anteile der Bildsequenz bzw. der darin erfassten Roboterumgebung umfassen.
- Dann erfolgt eine Bewertung von wenigstens einem Teilabschnitt der in der generierten Bildfolge enthaltenen bestimmten Trajektorie. Ein Ergebnis der Bewertung bzw. die Bewertung ist positiv, wenn eine durch Folgen der Trajektorie prädizierte Bewegung einer gültigen Bewegungssituation entspricht, oder negativ, wenn die durch Folgen der Trajektorie prädizierte Bewegung einer ungültigen Bewegungssituation entspricht. In anderen Worten wird auf Basis der generierten Bildfolge abgeschätzt, wie sich darin identifizierbare Merkmale, wie z.B. Fahrbahnmarkierungen, Böschungen, oder Objekte, wie z.B. andere Verkehrsteilnehmer etc., insbesondere in Bezug auf die Trajektorie verändern, bewegen oder ggf. ein Hindernis darstellen können. Z.B. könnte sich ein dynamisches Objekt in der Prädiktion von einem ersten Punkt A zu einem zweiten, entlang der Trajektorie angeordneten Punkt B bewegen und dann ein potentielles Hindernis darstellen. Die Trajektorie könnte in der Prädiktion aber auch eine Fahrbahnmarkierung, wie etwa einen Seitenstreifen einer Straße, tangieren oder schneiden. Dementsprechend kann es sich bei der prädizierten Bewegungssituation um eine Kollision mit einem anderen statischen oder dynamischen Objekt, das Abkommen von einer Straße oder ähnliche Situationen handeln. Unter einer Bewegungssituation kann z.B. bezogen auf eine Anwendung in der Fahrzeugtechnik ein Fahrereignis, eine Fahrsituation usw. verstanden werden.
- Zum Erzeugen eines Trainingsdatensatzes für das zu trainierende KI-Modul erfolgt dann ein Kombinieren der generierten zukünftigen Bildfolge mit der dieser zugeordneten Bewertung der Trajektorie zum Erzeugen eines Trainingsdatensatzes für das KI-Modul. D.h. dass der Trainingsdatensatz auf eingefahrenen Daten in Form der Bildsequenz bzw. der darauf basierenden, generierten zukünftigen Bildfolge in Kombination mit der bewerteten Prädiktion für einen über die Bildsequenz hinausgehenden, d.h. zukünftigen, Zeitabschnitt beruht.

Mit dieser Konfiguration ermöglicht das vorgeschlagene Verfahren ein verbessertes Training eines KI-Moduls, da es einen "Pseudo"- bzw. "offline"-Fahrsimulator verwendet, wobei "Pseudo" bzw. "offline" hier andeuten soll, dass die Trainingsdaten auf einer aufgenommenen Bildsequenz der realen Umwelt und nicht auf einer reinen, gegenüber der realen Umwelt vereinfachten Simulation basieren. Aufgrund der Realtitätsnähe gegenüber einer vereinfachten Simulation lässt sich eine hohe Trainingsqualität erreichen. Es können insbesondere für jedes in der Roboterumgebung identifizierte Objekt eine oder mehrere Trajektorien bestimmt werden. Die darauf basierenden realistischen Szenen in Form von Bildern sind idealerweise je nach Qualität ggf. nicht von der bereitgestellten, tatsächlich aufgezeichneten Bildsequenz unterscheidbar. Da die Trajektorien der einzelnen Objekte in der Roboterumgebung durch die Bestimmung bekannt sind, ist auch eine deutlich verbesserte Prädiktion möglich. Dadurch kann auch die Qualität der künstlich erzeugten Bildfolgen für den Zeitabschnitt in der Zukunft weiter verbessert werden. Gleichzeitig kann der Rechenaufwand zum Trainieren des KI-Moduls gering gehalten werden, da keine umfangreiche Simulation der Fahrzeugumgebung mehr benötigt wird, sondern nur eine Prädiktion für einen vergleichsweise kurzen Zeitabschnitt, der entsprechend weniger Rechenaufwand beansprucht.

In einer besonders vorteilhaften Weiterbildung ist vorgesehen, dass der Trainingsdatensatz in das KI-Modul eingespeist wird. Demnach kann der erzeugte Trainingsdatensatz als Eingangsgröße für ein KNN, insbesondere für eine Eingangsschicht desselben, und/oder einen Lernalgorithmus des KI-Moduls dienen, der z.B. einen Ansatz des maschinellen Lernens, wie z.B. bestärkendes Lernen, überwachtes Lernen usw. nutzt. Aufgrund der Realitätsnähe dieses Trainingsdatensatzes kann sich der Lernerfolg des KI-Moduls zügiger einstellen. Als Ergebnis einer Verarbeitung und/oder Interpretation des Trainingsdatensatzes kann das neuronale Netz des KI-Moduls eine Ausgabe ermitteln, bereitstellen und/oder ausgeben.

Damit die Bildsequenz möglichst effizient genutzt wird, kann eine einzige Bildsequenz bereitgestellt werden, aus der unter Bestimmung jeweils zueinander unterschiedlicher Trajektorien eine Vielzahl von Trainingsdatensätzen erzeugt werden. Das heißt, dass die vorstehend erläuterten Verfahrensschritte, die dem Bereitstellen der Bildsequenz nachfolgen, unter nochmaliger Verwendung dieser einen Bildsequenz wiederholt durchgeführt werden. Es werden also nach und nach unterschiedliche Trajektorien bestimmt, dafür jeweils eine Prädiktion über die Bildsequenz hinaus getroffen, die Trajektorien anhand der jeweiligen Prädiktion bewertet und diese Erkenntnisse, wie oben beschrieben, zu Trainingsdaten kombiniert bzw. aus dieser Kombination erzeugt. Es ist z.B. denkbar, dass nach und nach verschiedene geometrischen Größen der ursprünglich bestimmten Trajektorie variiert werden, also z.B. ein Winkel, eine Krümmung usw. Hierfür kann eine Variation der Trajektorie eines in der bereitgestellten Bildsequenz identifizierten dynamischen Objekts und/oder des Roboters, z.B. Fahrzeugs, von dessen Perspektive aus die Bildfolge erzeugt wird, beispielsweise anhand unterschiedlicher Lenkwinkel bei gleichbleibender Geschwindigkeit erfolgen, beispielsweise in 5° oder insbesondere in 1° Schritten erfolgen. Gleichzeitig oder als weitere Variable können auch mögliche Geschwindigkeitsänderungen bei der Wahl der Trajektorien mit einbezogen werden, beispielweise die genannten Lenkwinkeländerungen bei gleichzeitigen Verzögerungen um einen realistischen Verzögerungswert (beispielsweise basierend auf der aktuellen Fahrsituation, in Abhängigkeit des Roboters, z. B. Fahrzeugs, dessen Geschwindigkeit und äußeren Umständen, wie beispielsweise einer Nässe einer Fahrbahn). Auf diese Weise entstehen mehrere mögliche Trajektorien, die alle Grundlage für die anschließende Prädiktion der künstlich erzeugten Bilderfolgen sein können. Es können auch alle weiteren Trajektorien von sich bewegenden Objekten auf diese Art und Weise verändert werden und in die Prädiktion einfließen. Auf diese Weise entsteht eine endliche Menge an Trajektorien-Konfigurationen, die alle unterschiedliche Prädiktionen bewirken können, so dass zu jedem Trajektorien-Konfiguration unterschiedliche Bildfolgen prädiziert bzw. erzeugt werden können.

Demnach können in einer weiteren vorteilhaften Weiterbildung aus der bereitgestellten Bildsequenz wenigstens ein erster Trainingsdatensatz auf Basis einer ersten bestimmten Trajektorie und ein zweiter Trainingsdatensatz auf Basis einer zweiten bestimmten Trajektorie erzeugt werden. Selbstverständlich können darüber hinaus auch noch weitere Trainingsdatensätze erzeugt werden, wobei sich die weiteren Trajektorien, die mitsamt ihrer Bewertung und der Bildsequenz zu einem weiteren Trainingssatz kombiniert werden, in wenigstens einem Merkmal und/oder einer Eigenschaft der Trajektorie von vorhergehenden Trajektorien unterscheiden.

Gemäß einer Weiterbildung kann die generierte Bildfolge für die jeweilige bestimmte Trajektorie eine Anzahl von Tiefenbildern, realen Bildern und/oder Bildern einer Semantischen Segmentierung entlang derselben Trajektorie umfassen. In anderen Worten, kann die Ausgabe für jede Trajektorien-Konfiguration eine Anzahl von Bildfolgen von Tiefenbildern, realen Bildern und/oder Bildern einer Semantischen Segmentierung entlang derselben Trajektorie sein. Dadurch lassen sich besonders realitätsnahe Trainingsdaten für verschiedene Szenarien und/oder zum Trainieren unterschiedlicher Sensoren usw. erzeugen.

In einer Weiterbildung kann die Trajektorie für ein in der bereitgestellten Bildsequenz enthaltenes dynamisches Objekt bestimmt und darauf basierend die zukünftige Bildfolge generiert werden. In anderen Worten kann in der bereitgestellten Bildsequenz ein dynamisches Objekt identifiziert werden, für das zunächst eine oder mehrere unterschiedliche Trajektorien bestimmt werden und für die die zukünftigen Bildfolgen mit der entsprechenden Prädiktion entlang der jeweiligen Trajektorie erzeugt werden. Wenn die Trajektorien der einzelnen Objekte bekannt sind, führt dies zu einer deutlichen Verbesserung der Prädiktion, also den künstlich erzeugten Bildfolgen in der Zukunft.

Gemäß einer Weiterbildung kann die Trajektorie für den Roboter bestimmt und darauf basierend die zukünftige Bildfolge generiert wird.

Um unnötigen Rechenaufwand beim Bestimmen der Trajektorie zu vermeiden, kann eine Vorauswahl der möglichen Trajektorien getroffen werden. So kann die Vorauswahl der Trajektorie vorzugsweise verkehrssituativ unter Berücksichtigung einer vorbestimmten Wahrscheinlichkeitsverteilung erfolgen. Beispielsweise können unter Berücksichtigung der momentanen Fahrzeuggeschwindigkeit, die sich z.B. rechnerisch aus der Bildsequenz ermitteln lässt, Trajektorien als unrealistisch verworfen werden, wenn sie aufgrund einer gelernten oder definierten Wahrscheinlichkeitsverteilung nicht in der in der Bildsequenz in Bildern erfassten Umwelt bzw. Fahrzeugumgebung anordbar sind. Eine Trajektorie, die z.B. eine physikalisch nicht realisierbare Seitenführungskraft voraussetzt, was beispielsweise auch anhand eines Fahrdynamikmodells oder sonstiger rechnerischer Überlegung bestimmt werden kann, wäre demnach unwahrscheinlich. Diese Trajektorie würde bei der Vorauswahl anhand der Wahrscheinlichkeitsverteilung nicht berücksichtigt werden. So kann erreicht werden, dass das Verfahren nur für solche Trajektorien durchgeführt wird, die zu einem qualitativ sinnvollen Trainingsdatensatz führen.

Alternativ oder zusätzlich dazu, kann das Bestimmen der Trajektorie auch eine zufällige Auswahl derselben anhand einer vorbestimmten Wahrscheinlichkeitsverteilung erfolgen. Damit kann eine Vielzahl von Trajektorien zufällig berücksichtigt werden, wobei die Auswahl auf diejenigen Trajektorien beschränkt wird, die anhand der Wahrscheinlichkeitsverteilung in der durch die Bildsequenz vorgegebene Umgebung bzw. Umwelt des Roboters zumindest weitgehend realistisch umsetzbar sind. Dadurch kann Rechenaufwand eingespart werden, da das Verfahren nur für solche Trajektorien durchgeführt wird, die zu einem qualitativ sinnvollen Trainingsdatensatz führen.

Die zu bestimmenden Trajektorien können dadurch vorausgewählt werden, dass das Bestimmen nur für diejenige oder diejenigen Trajektorien erfolgt, die fahrsituativ unter Berücksichtigung eines Fahrdynamikmodells umsetzbar sind. So ist es denkbar, dass eine in der Fahrzeugebene gekrümmt verlaufende Trajektorie einen Radius aufweist, der für Fahrzeuge im Allgemeinen oder einige Fahrzeugtypen fahrdynamisch nicht umsetzbar sind, weil z.B. die sich entlang der Trajektorie ergebende Kurvenfahrt physikalisch nicht realisieren lässt. Eine solche Trajektorie kann dann noch vor dem Bestimmen verworfen werden, ohne dass das Verfahren bis zur Bewertung der folglich nur negativ bewertbaren Trajektorie durchlaufen werden muss. Das Fahrdynamikmodell kann z.B. der sogenannte Kamm'sche Kreis sein, wobei auch detailliertere Modelle zum Einsatz kommen können.

Es hat sich überraschenderweise gezeigt, dass bereits ein vergleichsweise kurzer Zeitabschnitt für das Prädizieren ausreichend ist, um eine gute Qualität des Trainingsdatensatzes zu erreichen und gleichzeitig den Rechenaufwand gering zu halten. Dementsprechend kann in einer vorteilhaften Weiterbildung der Erfindung der mit oder nach dem Sequenzendzeitpunkt beginnende Zeitabschnitt für die Prädiktion mit einer Dauer zwischen 0,5 s und 1,5 s, bevorzugt mit etwa 1 s, festgelegt werden. Diese Dauer hat sich als guter Kompromiss zwischen der Güte des Trainings und dem benötigten Rechenaufwand erwiesen. Zudem können für eine solche Zeitspanne gängige Bildverarbeitungsverfahren mit einer ausreichend guten Vorhersagegenauigkeit eingesetzt werden.

Eine vorteilhafte Weiterbildung der Erfindung sieht vor, dass die Prädiktion wenigstens eines oder mehrere der folgenden Verfahren beinhaltet: monokulare Tiefenschätzung, Stereo-Tiefenschätzung, LIDAR-Datenverarbeitung und/oder Schätzung aus optischem Fluss. Z.B. kann aus dem optischen Fluss mehrerer Einzelbilder der Bildsequenz eine Prädiktion bzw. Vorhersage für weitere Einzelbilder erfolgen, die über den Sequenzendzeitpunkt hinaus nicht mehr in der Bildsequenz enthalten sind. Je nach Verfahren müssen nicht zwingend sämtliche Einzelbilder der Bildsequenz verarbeitet werden, sondern nur eine Teilmenge davon. Diese Verfahren zur Tiefenprädiktion sind z.B. auch als Toolbox verfügbar und können daher einfach bezogen und für diesen Zweck verwendet werden.

Um Objekte, wie etwa Hindernisse oder andere Verkehrsteilnehmer, und/oder Merkmale der in der Bildsequenz erfassten Fahrzeugumgebung klassifizieren zu können, kann das Prädizieren das Erzeugen einer Semantischen Segmentierung von wenigstens einigen Einzelbildern der Bildsequenz beinhalten. Damit können sowohl die Fahrereignisse genauer vorhergesagt als auch die Bewertung derselben verbessert werden. Selbstverständlich lassen sich die Verfahren der Tiefenprädiktion und der Semantischen Segmentierung kombinieren, so dass die Vorhersagegenauigkeit nochmals verbessert werden kann. So kann die Schätzung aus dem optischen Fluss beispielsweise nur für bestimmte Klassen der Semantischen Segmentierung; wie etwa für dynamische Objekte, durchgeführt werden.

Eine weitere vorteilhafte Weiterbildung der Erfindung sieht vor, dass beim Bewerten eine aus der Semantischen Segmentierung gewonnene Objekterkennung und/oder Merkmalserkennung verwendet wird, um die aus dem Bewerten erhaltene positive oder negative Bewertung zu gewichten. Würde die Bewertung ohne eine Gewichtung auf einer beispielhaften Skala von z.B. Null oder -1 für eine negative Bewertung und z.B. +1 für eine positive Bewertung des vorhergesagten Fahrereignisses betragen, so kann auf Basis der Objekt- und/oder Merkmalserkennung zwischen verschiedenen Fahrereignissen unterschieden werden. Z.B. könnte eine Kollision mit einem als Fußgänger klassifizierten Objekt negativer, z.B. mit -1, bewertet werden als ein Überfahren einer Bordsteinkante, die z.B. den Wert -0,7 haben könnte. Die Bewertung der folgenärmeren Kollision mit der Bordsteinkante wäre in diesem Beispiel also betragsmäßig weniger negativ als die Kollision mit dem Fußgänger. Diese Objekt- und/oder Merkmalserkennung kann damit die Trainingsqualität des KI-Moduls weiter verbessern.

Das erfindungsgemäße Verfahren eignet sich nicht nur für Trajektorien, die für ein Ego-Fahrzeug, aus dessen Perspektive die Bildsequenz bzw. die darin erfasste Fahrzeugumgebung bedingt durch das Einfahren derselben erfasst ist. So sieht eine vorteilhafte Weiterbildung der Erfindung vor, dass Bestimmen von wenigstens einer Trajektorie, das Prädizieren eines Fahrereignisses für den Zeitabschnitt und das Bewerten der Trajektorie auf Basis der Prädiktion für ein in der Bildsequenz identifiziertes dynamisches Objekt durchgeführt werden, das folglich zu dem Ego-Fahrzeug verschieden ist. So kann z.B. mittels Semantischer Segmentierung und/oder der Prädiktion ein sich bewegender Fußgänger als dynamisches Objekt identifiziert werden. Für diesen wird dann - analog zu dem vorstehend beschriebenen - wenigstens eine Trajektorie bestimmt, für diese die Prädiktion und Bewertung durchgeführt, und daraus ebenfalls ein Trainingsdatensatz erzeugt.

Eine besonders vorteilhafte Weiterbildung sieht vor, dass das hier beschriebene Verfahren den Ansatz des sogenannten bestärkenden Lernens, im Englischen als reinforcement learning bezeichnet, verwendet, um das KI-Modul zu trainieren. Das bestärkende Lernen ist eine an sich bekannte Methodik des Maschinellen Lernens, bei der die vorstehend beschriebene Bewertung auch als positive oder negative "Belohnung" (im Englischen als reward bezeichnet) erachtet wird.

Alternativ zum Ansatz des bestärkenden Lernens, kann das hier beschriebene Verfahren aber auch auf dem Ansatz des sogenannten überwachten Lernens, im Englischen auch als supervised learning bezeichnet, erfolgen, was wiederum eine an sich bekannte Methodik des Maschinellen Lernens ist. Gemäß dieser Weiterbildung kann eine positiv bewertete Trajektorie als gültige Fahrsituation einem überwachten Lernalgorithmus zugeführt werden. Z.B. kann eine positiv bewertete Trajektorie mit der Prädiktion zusammen als eine Art Sequenz/Label-Paar für eine gültige Fahrsituation verarbeitet werden.

Die Erfindung bezieht sich auch auf eine Datenverarbeitungseinrichtung, wenigstens eine Speichereinheit sowie eine Recheneinheit aufweist, und zum Ausführen des vorstehend erläuterten Verfahrens eingerichtet ist.

Des Weiteren bezieht sich die Erfindung auch auf eine Vorrichtung zur Steuerung, insbesondere Steuervorrichtung, eines wenigstens teilautonomen Roboters, wobei die Vorrichtung dazu eingerichtet ist, das oben definierte Verfahren durchzuführen, daraus eine bewertete Trajektorie zu wählen und den Roboter entsprechend der ausgewählten Trajektorie anzusteuern.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Kurze Beschreibung der Figuren

Im Folgenden werden Ausführungsbeispiele der Erfindung mit Bezug auf die begleitenden Figuren detailliert beschrieben. Es zeigen:
Figur 1 eine schematische Übersicht eines Anwendungskonzepts eines erfindungsgemäßen Verfahrens zum Trainieren eines KI-Moduls und
Figur 2 ein Flussdiagramm zur Illustration von Schritten eines erfindungsgemäßen Verfahrens zum Trainieren eines KI-Moduls.

Die Figuren sind lediglich schematisch und nicht maßstabsgetreu. In den Figuren sind gleiche, gleichwirkende oder ähnliche Elemente durchgängig mit gleichen Bezugszeichen versehen.

### Ausführungsformen der Erfindung

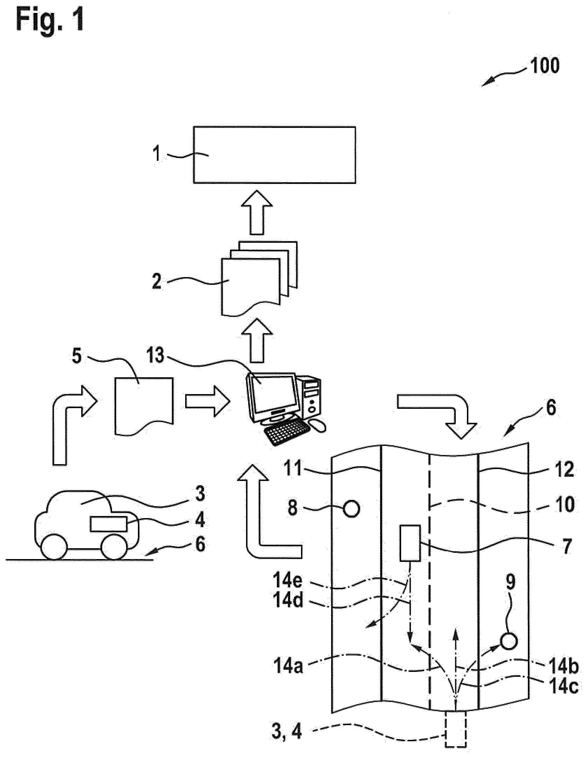

Fig. 1 zeigt zur besseren Veranschaulichung ein schematisch dargestelltes Konzept 100 zur Anwendung eines erfindungsgemäßen Verfahrens zum Trainieren eines Künstlichen-Intelligenz-Moduls 1, das im Folgenden kurz als KI-Modul 1 bezeichnet ist. Dieses weist beispielsweise ein oder mehrere mehrschichtige KNN auf, die eine Ausgabe in Form von Signalen für eine Vorrichtung zum Steuern eines wenigstens teilautonomen Roboters erzeugen kann. Diese Ausgabe kann die Vorrichtung zum Steuern des Roboters zum Ansteuern von Aktoren und ähnlichen Einrichtungen veranlassen, um computergesteuerte Bewegungen automatisch auszuführen. Bei dem Roboter handelt es sich hier lediglich exemplarisch um ein zumindest teilweise automatisiert fahrendes Fahrzeug. Alternativ dazu, kann es sich bei dem wenigstens teilautonomen Roboter auch um einen anderen mobilen Roboter (nicht abgebildet) handeln, beispielsweise um einen solchen, der sich durch Fliegen, Schwimmen, Tauchen oder Schreiten fortbewegt. Bei dem mobilen Roboter kann es sich beispielsweise auch um einen wenigstens teilautonomen Rasenmäher oder einen wenigstens teilautonomen Putzroboter handeln. Auch in diesen Fällen können ein oder mehrere Aktuatoren, z.B. ein Antrieb und/oder eine Lenkung des mobilen Roboters derart elektronisch angesteuert werden, dass sich der Roboter wenigstens teilautonom bewegt.

Im Folgenden wird der Roboter lediglich exemplarisch als Fahrzeug beschrieben. Wie nachfolgend beschrieben, wird das KI-Modul 1 des Fahrzeugs mit einer Vielzahl von Trainingsdatensätzen 2 trainiert, die beispielsweise einer Eingangsschicht des KNN zugeführt werden.

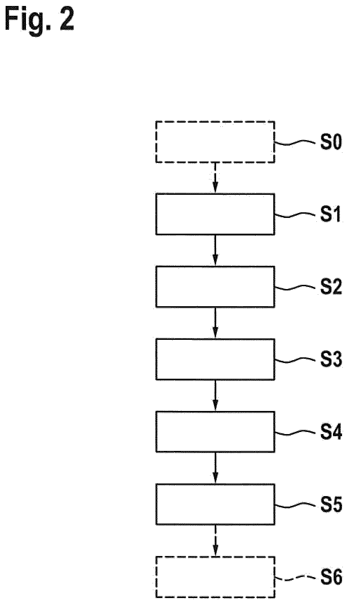

Das erfindungsgemäße Verfahren zum Trainieren des KI-Moduls 1 sieht in einem optionalen Schritt S0 (siehe auch das Flussdiagram in Figur 2) zunächst vor, dass z.B. mit einem Fahrzeug 3 unter realen Fahrbedingungen, d.h. im Real-Fahrbetrieb des für das Training verwendeten Fahrzeugs 3, mittels einer Bilderfassungseinrichtung 4 wenigstens eine Bildsequenz 5 der Fahrzeugumgebung 6 während des Real-Fahrbetriebs erstellt wird. Hierfür umfasst die Bilderfassungseinrichtung 4 z.B. eine oder mehrere Kameras, LIDAR-Sensoren usw. Die Bildsequenz 5 liegt dann als z.B. Videodatei vor und lässt sich dementsprechend computergestützt verarbeiten.

In einem Schritt S1 (siehe auch das Flussdiagramm in Figur 2) wird die Bildsequenz 5 mit der darin enthaltenen Fahrzeugumgebung 6 zur weiteren Verarbeitung bereitgestellt, wobei die Bildsequenz 5 einen Sequenzstartzeitpunkt, also den Beginn der Erfassung der Fahrzeugumgebung 6 und einen Sequenzendzeitpunkt t0 hat, also das Ende der Erfassung der Fahrzeugumgebung 6. Die Fahrzeugumgebung 6 ist hier beispielsweise eine öffentliche Straße, z.B. eine Landstraße, und weist exemplarisch mehrere statische und dynamische Objekte 7, 8, 9 sowie mehrere Merkmale 10, 11, 12 auf, bei denen es sich um einen Verkehrsteilnehmer in Form eines anderen Fahrzeugs (= dynamisches Objekt 7), zwei Bäume am linken bzw. rechten Fahrbahnrand (= statische Objekte 8, 9) und die Fahrbahnmitte- und Fahrbahnrandmarkierungen (= Merkmale 10, 11, 12) handelt. Zur besseren Veranschaulichung ist hier auch noch das Fahrzeug 3 (außerhalb der Fahrzeugumgebung 6) als Ego-Fahrzeug gezeigt, mit dem die Bildsequenz 5 vor ihrer Bereitstellung als Videodatei eingefahren wurde und aus deren Perspektive die hier vereinfacht dargestellte Fahrzeugumgebung 6 wiedergegeben ist.

Die bereitgestellte Bildsequenz 5 wird dann z.B. unter Zuhilfenahme einer Datenverarbeitungseinrichtung 13, die in Figur 1 exemplarisch allgemein als Rechner oder Workstation mit wenigstens einer Speichereinheit sowie einer Recheneinheit dargestellt ist, mit entsprechenden Rechenanweisungen weiterverarbeitet. Auch die nachfolgend beschriebenen, weiteren Schritte des hier beschriebenen Verfahrens werden unter Zuhilfenahme der Datenverarbeitungseinrichtung 13 durchgeführt.

So wird in einem Schritt S2 wenigstens eine in der bereitgestellten Fahrzeugumgebung anordbare Trajektorie 14a, 14b, 14c, 14d durch z.B. verkehrssituatives, fahrdynamikabhängiges und/oder fahrsituatives Auswählen unter Berücksichtigung einer gelernten oder definierten Wahrscheinlichkeitsverteilung bestimmt. Demnach wird hier vorzugsweise eine Vorauswahl der Trajektorien getroffen, wobei z.B. fahrsituativ unrealistische Trajektorien vor dem Bestimmen im Schritt S2 verworfen werden. In dem in Figur 1 dargestellten Beispiel werden exemplarisch die vier Trajektorien 14a, 14b, 14c, 14d bestimmt, da diese vorgegebenen Fahrzeugumgebung 6 anordbar und fahrsituativ, d.h. unter Berücksichtigung z.B. physikalischer Randbedingungen auch grundsätzlich befahrbar sind.

In diesem Ausführungsbeispiel kreuzt die Trajektorie 14a, die hier an dem Ego-Fahrzeug beginnt, den voraussichtlichen Fahrweg des dynamischen Objekts 7, der hier zusätzlich auch als Trajektorie 14d bestimmt ist. Die Trajektorie 14e beginnt ebenfalls am Objekt 7 und führt über die Fahrbahnrandmarkierung 11 hinweg in z.B. eine Böschung der abgebildeten Straße. Die Trajektorie 14b führt beginnend an dem Ego-Fahrzeug geradeaus weiter in derselben hindernisfreien Fahrspur. Die Trajektorie 14c führt mit demselben Ursprung auf das Objekt 10, also ein statisches Objekt, zu.

Für jede dieser Trajektorien 14a-14e wird in einem Schritt S3 (siehe auch das Flussdiagramm in Figur 2) wenigstens eine zukünftige Bildfolge generiert, die sich auf einen in Bezug auf den Sequenzendzeitpunkt t0 in der Zukunft liegenden Zeitabschnitt t0+n erstreckt und basierend auf der wenigstens einen bestimmten Trajektorie 14a-14e eine Prädiktion von Bildern für den Fall umfasst, dass der bestimmten Trajektorie 14a-14e während des in der Zukunft liegenden Zeitabschnitts t0+n, entweder durch das Ego-Fahrzeug oder, im Fall der Trajektorien 14d und 14e durch das dynamische Objekt 7, gefolgt würde. Das heißt, dass anhand der dynamischen Objekte, inklusive des Ego-Fahrzeugs, diejenigen Trajektorien 14a-14e berechnet werden, die für diese Objekte möglich, z.B. fahrdynamisch möglich, sind. Diese Trajektorien 14a-14e stellen eine Art Parametrisierung dar, um die Bildfolgen einer Prädiktion in die Zukunft zu bilden, entweder mit KI oder weiteren bekannten Prädiktionsverfahren. Die Ausgabe für jede der Trajektorien 14a-14e sind künstlich erzeugte Bildfolgen von Tiefenbildern, realen Bildern und/oder Bildern einer Semantischen Segmentierung entlang der jeweils selben Trajektorie 14a-14e. Somit wird die gesamte Szene der jeweiligen Bildfolge simuliert, wobei möglichst viele oder alle dynamischen und nicht-dynamischen Anteile der in der Bildsequenz 5 erfassten Roboterumgebung enthalten sind. Die Simulation der Bildfolge erfolgt in unterschiedlicher Weise, nämlich als semantische Segmentierung mit mehreren Bildern, als Realbild mit mehreren Bildern und/oder als Tiefenbild mit mehreren Bildern.

Dabei wird aber nur ein vergleichsweise kurzer Zeitabschnitt t0+n betrachtet, der am oder nach dem Sequenzendzeitpunkt t0 beginnt und sich von dort um z.B. 0,5 s bis 1,5 s in die Zukunft erstreckt. Je nach akzeptiertem Rechenaufwand sind mit den nachfolgend erläuterten Prädiktionsverfahren aber auch längere Zeitabschnitte prädizierbar, so dass der betrachtete Zeitabschnitt t0+n auch ausgedehnt werden kann. In diesem Ausführungsbeispiel wird der Zeitabschnitt t0+n jedoch auf 1 s festgelegt, was sich für zahlreiche praktische Fälle in Bezug auf Rechenaufwand und erzielbaren Nutzen als vorteilhaft erwiesen hat.

Zur Prädiktion der Bildfolge wird die bereitgestellte Bildsequenz 5 durch geeignete Bildverarbeitungsverfahren und/oder Prädiktionsverfahren, die als Softwarepakete oder ähnliches verfügbar sind, computergestützt in der Datenverarbeitungseinrichtung 13 mit den bestimmten Trajektorien 14a-14e als eine Art Parameter weiterverarbeitet.

Um eine möglichst genaue Vorhersage für zukünftige Bewegungssituationen, wie z.B. Fahrereignisse, zu treffen, kann eine Klassifikation der Objekte 7, 8, 9 und der Merkmale 10, 11, 12 in z.B. diese beiden Klassen oder, noch genauer, in die Klassen Fahrzeug, Baum, Fahrbahnmitte- und Fahrbahnrandmarkierung erfolgen. Diese Klassifikation kann auch geeignete Verfahren zur Semantischen Segmentierung umfassen, die allgemein bekannt sind und z.B. pixel- oder voxelbasiert sein können, wobei ähnliche Regionen, also z.B. alle inhaltlich benachbarten Pixel des jeweiligen Objekts 7, 8, 9, zu inhaltlich zusammenhängenden Regionen zusammengefasst werden.

Alternativ oder zusätzlich zur Semantischen Segmentierung werden beispielsweise eine für diesen Zweck geeignete Prädiktion der Bilder und/oder eine Tiefenprädiktion auf Basis der Bildsequenz 5 durchgeführt. Die Tiefenprädiktion enthält vorzugsweise eine monokulare oder Stereo-Tiefenschätzung, eine Schätzung aus dem optischen Fluss und/oder eine LIDAR-Schätzung, z.B. durch Einsatz eines Kalman-Filters, auf Basis von einigen oder allen Einzelbildern der Bildsequenz 5 oder ähnliche Verfahren. Die Tiefenprädiktion verwendet z.B. ein KNN, insbesondere ein autoregressive convolutional neural network, das aus den gegebenen Einzelbildern der Bildsequenz 5 autoregressiv über den Sequenzendzeitpunkt t0 hinweg eine Prädiktion für den Zeitabschnitt t+n trifft. Praktisch betrachtet, kann die Bildsequenz 5 zum Sequenzendzeitpunkt t0 als Eingangsgröße für eine Prädiktion zum Zeitpunkt t0+1, die daraus erhaltene Prädiktion zum Zeitpunkt t0+1 (der bereits im betrachteten Zeitabschnitt t0+n liegt und deshalb nicht mehr in der Bildsequenz 5 enthalten ist) wiederum als Eingangsgröße für eine weitere Prädiktion zum Zeitpunkt t0+2 usw. dienen, um so eine Prädiktion bis zum Zeitpunkt t0+n, also über den gesamten zu vorhersagenden Zeitabschnitt, zu treffen. Darüber hinaus sind aber auch andere Prädiktionsverfahren denkbar, auf deren Beschreibung an dieser Stelle der Übersichtlichkeit halber verzichtet wird. Es wird also eine mögliche Veränderung der Fahrzeugumgebung entlang und/oder benachbart zu der jeweiligen Trajektorie 14a bis 14e für den Zeitabschnitt t0+n abgeschätzt.

In diesem Ausführungsbeispiel kann das Ergebnis des Vorhersagens bzw. der Prädiktion sein, dass das auf die Trajektorie 14a bezogene Fahrereignis eine Kollision mit dem sich selbst bewegenden, also dynamischen, Objekt 7 ist. Dies ist anhand der Figur 1 gut nachvollziehbar, da sich dort die als gestrichelte Linie dargestellten Trajektorien 14a und 14d schneiden. Die für das Objekt 7 bestimmte Trajektorie 14d führt für sich allein betrachtet geradeaus weiter und bedeutet im Prinzip eine ungestörte Weiterfahrt für das Objekt 7. Jedoch in Bezug auf das Ego-Fahrzeug 3 schneidet die Trajektorie 14d - wie oben erläutert - die Trajektorie 14a des Ego-Fahrzeugs 3 und führt daher voraussichtlich zu der Kollision mit demselben. Es sei aber angemerkt, dass die explizite Bestimmung der Trajektorie 14d für diese Prädiktion nicht zwingend notwendig ist, sondern sich die Bewegung des Objekts 7 direkt aus der Prädiktion abschätzen lässt. Das vorhergesagte Fahrereignis bezogen auf die Trajektorie 14b wäre dagegen eine im Prinzip ungestörte Weiterfahrt. Dagegen wäre das vorhergesagte Fahrereignis bezogen auf die Trajektorie 14c eine Kollision mit dem statischen Objekt 9.

In einem Schritt S4 (siehe auch das Flussdiagramm in Figur 2) wird die jeweilige generierte Bildfolge und/oder wenigstens ein Teilabschnitt der darin enthaltenen bestimmten Trajektorie 14a-14e bewertet. Dabei wird der jeweilige Teilabschnitt oder die gesamte Trajektorie 14a-14e als positiv bewertet, wenn die vorhergesagte Bewegungssituation, z.B. das vorhergesagte Fahrereignis, (vgl. Schritte S3 und S4, siehe auch Figur 2) einer gültigen Bewegungssituation, z.B. gültigen Fahrsituation, entspricht. Dagegen wird der jeweilige Teilabschnitt oder die gesamte Trajektorie 14a-14e als negativ bewertet, wenn die vorhergesagte Bewegungssituation, z.B. das vorhergesagte Fahrereignis, einer ungültigen Bewegungssituation, z.B. einer ungültigen Fahrsituation, entspricht.

In diesem Ausführungsbeispiel wird die Trajektorie 14a bzw. das Folgen oder Befahren derselben aufgrund der dafür vorhergesagten Kollision mit dem Objekt 7 als ungültige Fahrsituation negativ bewertet. Ebenso wird die Trajektorie 14c als ungültige Fahrsituation negativ bewertet, da auch hier eine Kollision mit dem Objekt 9 vorgesagt wird. Auch die auf das Objekt 7 bezogene Trajektorie 14e ist als negativ zu bewerten, da hier das Merkmal 11 als Randmarkierung der Fahrbahn überfahren wird und das Objekt 7 in diesem Fall von der Fahrbahn abkommen würde. Jedoch werden die Trajektorie 14b für das Ego-Fahrzeug und die Trajektorie 14d für das Objekt 7 als positiv bewertet, bei der eine freie Geradeausfahrt zu erwarten ist und dies einer gültigen Fahrsituation entspricht.

Beachtenswert ist, dass die Bewertung positiv und negativ gewichtet erfolgt, also auch relativiert werden kann. In diesem Ausführungsbeispiel wird die Trajektorie 14a aufgrund des Schweregrads der Kollision mit einem anderen Verkehrsteilnehmer (= Objekt 7) negativer bewertet als die Trajektorie 14c, die zwar ebenfalls zu einer Kollision führt, aber z.B. keinen anderen Verkehrsteilnehmer betrifft oder ggf. auch einen längeren Bremsweg bieten kann usw. Demnach kann die jeweilige Bewertung des Fahrereignisses also nach dem Grad der jeweiligen Gültigkeit oder Ungültigkeit der Fahrsituation gewichtet werden.

In einem Schritt S5 (siehe auch das Flussdiagramm in Figur 2) wird die künstlich generierte Bildfolge mit der Prädiktion aus Schritt S3 für die jeweilige Trajektorie 14a-14e mit der jeweiligen Bewertung aus Schritt S4 durch entsprechende Rechenanweisungen in der Datenverarbeitungsanlage 13 kombiniert. Mit oder aus dieser Kombination wird dann der Trainingsdatensatz 2 erzeugt, der sich folglich aus im Prinzip eingefahrenen Daten, nämlich der Bildsequenz 5, und der darauf basierenden Bildfolge mit der Prädiktion für die jeweilige Trajektorie 14a-14e für den Zeitabschnitt t0+n sowie der jeweiligen Bewertung derselben zusammensetzt. Der aus dieser Kombination erzeugte Trainingsdatensatz 2 entspricht so einer Art Pseudo-Fahrsimulator, der auf der realen Fahrzeugumgebung 6 des Bildsequenz 5 basiert und künstlich erzeugte Bildfolgen umfasst, in denen möglichst viele unterschiedliche Bewegungen dynamischer Objekte, einschließlich des sich relativ zur Umgebung bewegenden Ego-Fahrzeugs 3, berücksichtigt sind. Die Ausgabe für jede Trajektorie 14a-14e sind Bildfolgen von Tiefenbildern, realen Bildern und/oder Bildern einer Semantischen Segmentierung entlang derselben Trajektorien.

In einem optionalen Schritt S6 (siehe auch das Flussdiagramm in Figur 2) wird dieser Trainingsdatensatz 2 aus Schritt S5 dem KI-Modul 1 als z.B. Eingangsgröße(n) seines KNN, also beispielsweise seiner Eingangsschicht, oder seines sonstigen Lernalgorithmus zugeführt bzw. dort eingespeist. Dabei ist vorgesehen, dass der Trainingsdatensatz 2 für maschinelles Lernen unter Einsatz eines Ansatzes zum bestärkenden Lernen verwendet wird, um mit diesem Ansatz das KNN des KI-Moduls 1 zu trainieren.

Figur 2 zeigt den Ablauf des erfindungsgemäßen Verfahrens mit dem optionalen Schritt S0, den Schritten S1 bis S5 und dem optionalen Schritt S6 in Form eines Flussdiagramms. Beachtenswert ist, dass dieses Trainingsverfahren für das KI-Modul 1 - wie oben erläutert - auf Basis aufgenommener Bildsequenzen in Kombination mit einer aus der Bildsequenz gewonnenen Prädiktion für einen über die Bildsequenz hinausgehenden, vorbestimmten Zeitabschnitt t0+n erfolgt.

Ausgehend von dem dargestellten Ausführungsbeispiel kann das erfindungsgemäße Verfahren in vielerlei Hinsicht abgewandelt werden. So ist es beispielsweise denkbar, dass im optionalen Schritt S6 die Bewertung nicht für das oben erläuterte Bestärkende Lernen, sondern mit der künstlich erzeugten Bildfolge bzw. Prädiktion zusammen als Sequenz/Label-Paar für eine gültige Fahrsituation zum Trainieren eines überwachten Lernalgorithmus eingesetzt wird. Zudem ist denkbar, dass das oben beschriebene Verfahren in Echtzeit von einer Vorrichtung zur Steuerung eines Roboters, z.B. einem Steuergerät in einem Fahrzeug usw., durchgeführt wird und basierend auf der Bewertung der unterschiedlichen Trajektorien, die anhand des oben beschriebenen Verfahrens bewertet werden, eine Trajektorie gewählt und der Roboter zum Bewegen gemäß der ausgewählten Trajektorie elektronisch angesteuert wird.

## Patentansprüche

1. Verfahren zum Erzeugen eines Trainingsdatensatzes zum Trainieren eines Künstlichen-Intelligenz-Moduls, KI-Moduls (1), umfassend die Schritte:
- Bereitstellen einer Bildsequenz (5), in der eine Umgebung (6) eines Roboters erfasst ist,
- Bestimmen von wenigstens einer Trajektorie (14a-14e), die in der erfassten Umgebung (6) des Roboters anordbar ist,
- Generieren von wenigstens einer zukünftigen Bildfolge, die sich auf einen in Bezug auf einen Sequenzendzeitpunkt (t0) in der Zukunft liegenden Zeitabschnitt (t0+n) erstreckt und basierend auf der wenigstens einen bestimmten Trajektorie (14a-14e) eine Prädiktion von Bildern für den Fall umfasst, dass der bestimmten Trajektorie (14a-14e) während des in der Zukunft liegenden Zeitabschnitts (t0+n) gefolgt würde,
- Bewerten von wenigstens einem Teilabschnitt der in der generierten Bildfolge enthaltenen bestimmten Trajektorie (14a-14e) als positiv, wenn eine durch Folgen der Trajektorie (14a-14e) prädizierte Bewegung einer gültigen Bewegungssituation entspricht, oder als negativ, wenn die durch Folgen der Trajektorie (14a-14e) prädizierte Bewegung einer ungültigen Bewegungssituation entspricht, und
- Kombinieren der generierten zukünftigen Bildfolge mit der dieser zugeordneten Bewertung der Trajektorie (14a-14e) zum Erzeugen eines Trainingsdatensatzes (2) für das KI-Modul (1).

2. Verfahren nach Anspruch 1, **dadurch gekennzeichnet, dass** der Trainingsdatensatz (2) in das KI-Modul (1) eingespeist wird.

3. Verfahren nach einem der vorhergehenden Ansprüche, **dadurch gekennzeichnet, dass** nur eine einzige Bildsequenz (5) bereitgestellt wird, aus der unter Bestimmung jeweils zueinander unterschiedlicher Trajektorien (14a-14e) eine Mehrzahl von zukünftigen Bildfolgen erzeugt wird.

4. Verfahren nach einem der vorhergehenden Ansprüche, **dadurch gekennzeichnet, dass** die generierte Bildfolge für die jeweilige bestimmte Trajektorie (14a-14e) eine Anzahl von Tiefenbildern, realen Bildern und/oder Bildern einer Semantischen Segmentierung entlang derselben Trajektorie umfasst.

5. Verfahren nach einem der vorhergehenden Ansprüche, **dadurch gekennzeichnet, dass** die Trajektorie (14a-14e) für ein in der bereitgestellten Bildsequenz (5) enthaltenes dynamisches Objekt bestimmt und darauf basierend die zukünftige Bildfolge generiert wird.

6. Verfahren nach einem der vorhergehenden Ansprüche, **dadurch gekennzeichnet, dass** die Trajektorie (14a-14e) für den Roboter bestimmt und darauf basierend die zukünftige Bildfolge generiert wird.

7. Verfahren nach Anspruch einem der vorhergehenden Ansprüche, **dadurch gekennzeichnet, dass** das Bestimmen nur für die eine oder mehreren Trajektorien (14a-14e) erfolgt, die fahrsituativ unter Berücksichtigung eines zugeordneten Fahrdynamikmodells des als Fahrzeug ausgebildeten Roboters umsetzbar sind.

8. Verfahren nach einem der vorhergehenden Ansprüche, **dadurch gekennzeichnet, dass** der Zeitabschnitt (t+n) mit einer Dauer zwischen 0,5 s und 1,5 s, bevorzugt mit etwa 1 s, festgelegt wird.

9. Verfahren nach einem der vorhergehenden Ansprüche, **dadurch gekennzeichnet, dass** das Prädizieren wenigstens eines oder mehrere der folgenden Verfahren beinhaltet: monokulare Tiefenschätzung, Stereo-Tiefenschätzung, LIDAR-Datenverarbeitung und/oder Schätzung aus optischem Fluss.

10. Verfahren nach einem der vorhergehenden Ansprüche, **dadurch gekennzeichnet, dass** das Prädizieren das Erzeugen einer Semantischen Segmentierung von wenigstens einigen Einzelbildern der Bildsequenz (5) beinhaltet.

11. Verfahren nach Anspruch 10, **dadurch gekennzeichnet, dass** beim Bewerten eine aus der Semantischen Segmentierung gewonnene Objekterkennung und/oder Merkmalserkennung verwendet wird, um die positive oder negative Bewertung zu gewichten.

12. Verfahren nach einem der vorhergehenden Ansprüche, **dadurch gekennzeichnet, dass** die gültige Bewegungssituation eine kollisionsvermeidende und/oder straßenfolgende Weiterbewegung entlang der bestimmten Trajektorie (14a-14e) und die ungültige Fahrsituation ein Abkommen von einer Fahrbahn, ein Spurverlassen und/oder eine Kollision mit einem anderen Objekt (7, 8, 9) umfassen.

13. Datenverarbeitungseinrichtung (13) zum Trainieren eines Künstlichen-Intelligenz-Moduls (1), die wenigstens eine Speichereinheit und eine Recheneinheit aufweist und die dazu eingerichtet ist, ein Verfahren nach einem der vorherigen Ansprüche durchzuführen.

14. Vorrichtung zur Steuerung eines wenigstens teilautonomen Roboters, wobei die Vorrichtung dazu eingerichtet ist, ein Verfahren nach einem der Ansprüche 1 bis 12 durchzuführen, daraus eine bewertete Trajektorie zu wählen und den Roboter entsprechend der ausgewählten Trajektorie anzusteuern.

## Claims

1. Method for generating a training data set for training an artificial intelligence module, AI module (1), comprising the steps of:
- providing an image sequence (5) in which the surroundings (6) of a robot are recorded,
- determining at least one trajectory (14a-14e) which is able to be placed in the recorded surroundings (6) of the robot,
- generating at least one future image sequence which ranges over a period of time (t0+n) in the future with regard to a sequence end time (t0) and, based on the at least one determined trajectory (14a-14e), comprises a prediction of images in the event that the determined trajectory (14a-14e) were followed during the period of time (t0+n) in the future,
- assessing at least one section of the determined trajectory (14a-14e) contained in the generated image sequence as positive when a movement predicted by following the trajectory (14a-14e) corresponds to a valid movement situation, or as negative when the movement predicted by following the trajectory (14a-14e) corresponds to an invalid movement situation, and
- combining the generated future image sequence with the assessment of the trajectory (14a-14e) assigned to this generated future image sequence, for generating a training data set (2) for the AI module (1).

2. Method according to Claim 1, **characterized in that** the training data set (2) is fed into the AI module (1).

3. Method according to either of the preceding claims, **characterized in that** only a single image sequence (5) is provided, from which a plurality of future image sequences are generated while determining trajectories (14a-14e) that are respectively different from each other.

4. Method according to one of the preceding claims, **characterized in that** the generated image sequence for the respective determined trajectory (14a-14e) comprises a number of depth images, real images and/or images of a semantic segmentation along the same trajectory.

5. Method according to one of the preceding claims, **characterized in that** the trajectory (14a-14e) for a dynamic object contained in the provided image sequence (5) is determined and the future image sequence is generated on the basis thereof.

6. Method according to one of the preceding claims, **characterized in that** the trajectory (14a-14e) for the robot is determined and the future image sequence is generated on the basis thereof.

7. Method according to Claim one of the preceding claims, **characterized in that** the determining takes place only for the one or more trajectories (14a-14e) which are feasible in the driving situation taking into consideration an assigned driving dynamics model of the robot designed as a vehicle.

8. Method according to one of the preceding claims, **characterized in that** the period of time (t+n) is set for a duration of between 0.5 s and 1.5 s, preferably for about 1 s.

9. Method according to one of the preceding claims, **characterized in that** the predicting involves at least one or more of the following methods: monocular depth estimation, stereo depth estimation, lidar data processing and/or optical flow estimation.

10. Method according to one of the preceding claims, **characterized in that** the predicting involves generating a semantic segmentation of at least some individual images of the image sequence (5).

11. Method according to Claim 10, **characterized in that** during the assessment use is made of feature detection and/or object detection obtained from the semantic segmentation in order to weight the positive or negative assessment.

12. Method according to one of the preceding claims, **characterized in that** the valid movement situation comprises a collision-avoiding and/or road-following onward movement along the determined trajectory (14a-14e) and the invalid driving situation comprises leaving a roadway, leaving a lane and/or a collision with another object (7, 8, 9).

13. Data processing device (13) for training an artificial intelligence module (1), which device has at least one memory unit and one computing unit and is configured to carry out a method according to one of the preceding claims.

14. Device for controlling an at least partially autonomous robot, wherein the device is configured to carry out a method according to one of Claims 1 to 12, to select an assessed trajectory therefrom and to drive the robot in accordance with the selected trajectory.

## Revendications

1. Procédé de génération d'un ensemble de données d'apprentissage destinées à l'apprentissage d'un module d'intelligence artificielle, module AI (1), le procédé comprenant les étapes suivantes :
- fournir une séquence d'images (5) dans laquelle un environnement (6) d'un robot est détecté,
- déterminer au moins une trajectoire (14a-14e) qui peut être disposée dans l'environnement détecté (6) du robot,
- générer au moins une séquence d'images futures, qui s'étend sur un intervalle de temps futur (t0+n) par rapport à un instant de fin de séquence (t0) et comprend, sur la base de l'au moins une trajectoire déterminée (14a-14e), une prédiction d'images pour le cas où la trajectoire déterminée (14a-14e) serait suivie pendant l'intervalle de temps futur (t0+n),
- évaluer au moins une portion de la trajectoire déterminée (14a-14e), contenue dans la séquence d'images générée, comme positive si un mouvement prédit par le suivi de la trajectoire (14a-14e) correspond à une situation de mouvement valide, ou comme négative si le mouvement prédit par le suivi de la trajectoire (14a-14e) correspond à une situation de mouvement non valide, et
- combiner la séquence d'images futures générée à l'évaluation associée de la trajectoire (14a-14e) afin de générer un ensemble de données d'apprentissage (2) destiné au module AI (1).

2. Procédé selon la revendication 1, **caractérisé en ce que** l'ensemble de données d'apprentissage (2) est introduit dans le module AI (1).

3. Procédé selon l'une des revendications précédentes, **caractérisé en ce qu'**une seule séquence d'images (5) est prévue à partir de laquelle une pluralité de successions d'images futures est générée par détermination de trajectoires (14a-14e) différentes les unes des autres.

4. Procédé selon l'une des revendications précédentes, **caractérisé en ce que** la succession d'images générée pour la trajectoire déterminée respective (14a-14e) comprend un certain nombre d'images de profondeur, images réelles et/ou images d'une segmentation sémantique le long de la même trajectoire.

5. Procédé selon l'une des revendications précédentes, **caractérisé en ce que** la trajectoire (14a-14e) est déterminée pour un objet dynamique contenu dans la séquence d'images (5) fournie et la future succession d'images est générée à partir de celle-ci.

6. Procédé selon l'une des revendications précédentes, **caractérisé en ce que** la trajectoire (14a-14e) est déterminée pour le robot et la future succession d'images est générée à partir de celle-ci.

7. Procédé selon la revendication une des revendications précédentes, **caractérisé en ce que** la détermination n'est effectuée que pour la ou les trajectoires (14a-14e) qui peuvent être modifiées en situation de conduite avec prise en compte d'un modèle de dynamique de conduite associé du robot conçu comme un véhicule.

8. Procédé selon l'une des revendications précédentes, **caractérisé en ce que** l'intervalle de temps (t+n) est défini avec une durée comprise entre 0,5 s et 1,5 s, de préférence d'environ 1 s.

9. Procédé selon l'une des revendications précédentes, **caractérisé en ce que** la prédiction comprend au moins un ou plusieurs des procédés suivants : estimation de profondeur monoculaire, estimation de profondeur stéréo, traitement de données LIDAR et/ou estimation de flux optique.

10. Procédé selon l'une des revendications précédentes, **caractérisé en ce que** la prédiction comprend la génération d'une segmentation sémantique d'au moins certaines images individuelles de la séquence d'images (5).

11. Procédé selon la revendication 10, **caractérisé en ce que** la reconnaissance d'objet et/ou de caractéristique issue de la segmentation sémantique est utilisée lors de l'évaluation pour pondérer l'évaluation positive ou négative.

12. Procédé selon l'une des revendications précédentes, **caractérisé en ce que** la situation de mouvement valide est un autre mouvement évitant une collision et/ou suivant la route le long de la trajectoire déterminée (14a-14e) et la situation de conduite non valide est un écart par rapport à une chaussée, une sortie de voie et/ou une collision avec un autre objet (7, 8, 9).

13. Dispositif de traitement de données (13) destiné à l'apprentissage d'un module d'intelligence artificielle (1), lequel dispositif comporte au moins une unité de mémoire et une unité de calcul et est conçu pour mettre en œuvre un procédé selon l'une des revendications précédentes.

14. Dispositif de commande d'un robot au moins partiellement autonome,
le dispositif étant conçu pour mettre en œuvre un procédé selon l'une des revendications 1 à 12, pour sélectionner à partir de là une trajectoire évaluée et pour commander le robot en fonction de la trajectoire sélectionnée.
